# EUROPEAN PATENT APPLICATION

(11) **EP 4 786 416 A1**
(43) Date of publication of application: **05.08.2026**
(21) Application number: 24872720.8
(22) Date of filing: 14.08.2024
(51) Int. Cl.: C01D 1/38, C01D 1/30, C01D 15/02, B01D 61/44, B01D 61/42

(54) **MANUFACTURING METHOD FOR LITHIUM HYDROXIDE**

(30) Priority: 26.09.2023 KR 20230128793
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: KIM, Kyunghoon, Yeosu-si, Jeollanam-do 59691 (KR); KIM, Hye Jeong, Pohang-si, Gyeongsangbuk-do 37673 (KR); KIM, Dong Soo, Pohang-si, Gyeongsangbuk-do 37671 (KR); SEO, Bae Mun, Pohang-si, Gyeongsangbuk-do 37638 (KR); WI, Jin Yeop, Pohang-si, Gyeongsangbuk-do 37669 (KR); CHOI, Jaehyug, Pohang-si, Gyeongsangbuk-do 37669 (KR)
(74) Representative: Pfenning, Meinig & Partner mbB
(86) International application number: PCT/KR2024/012149
(87) International publication number: WO 2025/071011

(57) **Abstract**

Provided is a method for preparing lithium hydroxide, specifically, a method for preparing high-purity lithium hydroxide.

More specifically, a method for preparing lithium hydroxide including: adding a lithium salt aqueous solution to a salt chamber between an anion dialysis membrane and a cation dialysis membrane adjacent to each other of a bipolar electrodialysis device, adding an acid chamber reaction solution to an acid chamber between a bipolar membrane and the anion dialysis membrane, and adding a base chamber reaction solution to a base chamber between a bipolar membrane and the cation dialysis membrane; supplying a desalination solution formed in the salt chamber to a salt tank, supplying an acid solution formed in the acid chamber to an acid tank, and supplying a lithium hydroxide solution formed in the base chamber to a base tank; and circularly supplying the desalination solution in the salt tank to the salt chamber, circularly supplying the acid solution in the acid tank to the acid chamber, and circularly supplying the lithium hydroxide solution in the base tank to the base chamber, wherein a gauge pressure of the salt chamber is higher than a gauge pressure of the acid chamber, is provided.

## Description

### [Technical Field]

The present disclosure relates to a method for preparing lithium hydroxide, and more particularly, to a method for preparing high-purity lithium hydroxide using electrodialysis capable of controlling impurities.

### [Background Art]

Recently, due to the rapid growth of the IT and electric vehicle markets, a demand for lithium which is a core raw material of a secondary battery is expected to increase significantly.

The market for lithium for the secondary battery is highly concentrated in Korea, China, and Japan, but since lithium is entirely dependent on imports in Korea, a stable supply method is needed. Therefore, development of technology for extracting lithium from ores and brine is in progress, and a demo plant for producing lithium carbonate and lithium hydroxide from ores is in operation in Korea. A large amount of lithium is being produced in several companies in South America, China, and the like, and research on lithium production is being conducted also in Korea.

A lithium production process in progress in Korea is extracting lithium in a lithium sulfate aqueous solution form from ores and producing a lithium hydroxide aqueous solution using electrodialysis. The produced lithium hydroxide aqueous solution is crystallized to produce lithium hydroxide (LiOH-H₂O). A crystallization rate of a crystallizer is determined by an impurity concentration in the lithium hydroxide aqueous solution produced in an electrodialysis process, and whether battery grade lithium may be produced or a lithium production amount depends on the crystallization rate. Eventually, controlling impurities in the electrodialysis process may be an important factor in lithium production.

Therefore, development of a method for preparing lithium hydroxide which allows reduction of impurities is needed.

### [Disclosure]

### [Technical Problem]

The present disclosure attempts to provide a method for efficiently preparing lithium hydroxide while reducing impurity occurrence, and specifically, a method for preparing lithium hydroxide which may reduce impurities in a lithium hydroxide solution produced by adjusting pressures of a base chamber, an acid chamber, and the like, depending on the state of a membrane in an electrodialysis process.

### [Technical Solution]

An exemplary embodiment of the present disclosure provides a method for preparing high-purity lithium hydroxide including: adding a lithium salt aqueous solution to a salt chamber between an anion dialysis membrane and a cation dialysis membrane adjacent to each other of a bipolar electrodialysis device, adding an acid chamber reaction solution to an acid chamber between a bipolar membrane and the anion dialysis membrane, and adding a base chamber reaction solution to a base chamber between a bipolar membrane and the cation dialysis membrane; supplying a desalination solution formed in the salt chamber to a salt tank, supplying an acid solution formed in the acid chamber to an acid tank, and supplying a lithium hydroxide solution formed in the base chamber to a base tank; and circularly supplying the desalination solution in the salt tank to the salt chamber, circularly supplying the acid solution in the acid tank to the acid chamber, and circularly supplying the lithium hydroxide solution in the base tank to the base chamber. A gauge pressure of the salt chamber may be higher than a gauge pressure of the acid chamber.

A gauge pressure difference between the salt chamber and the acid chamber may be 0.001 to 0.5 bar, specifically, 0.005 to 0.05 bar.

The gauge pressure inside the salt chamber, the acid chamber, and the base chamber may be 0.1 to 2 bar, specifically 0.1 to 0.5 bar.

A pressure difference between the salt chamber and the acid chamber and a pressure difference between the salt chamber and the base chamber may be 0 to 1 bar.

A linear velocity of solution flow inside the acid chamber and the base chamber may be 1 to 30 cm/s.

Pressure inside the salt chamber, the acid chamber, and the base chamber may be controlled by adjusting a flow rate of the desalination solution which is circularly supplied from the salt tank to the salt chamber, a flow rate of the acid solution which is circularly supplied from the acid tank to the acid chamber, and a flow rate of the lithium hydroxide solution which is circularly supplied from the base tank to the base chamber.

After the lithium hydroxide solution formed in the base chamber is supplied to the base tank, supplying a part of the lithium hydroxide solution supplied to the base tank to a crystallization device at a latter stage to form lithium hydroxide monohydrate (LiOH·H₂O) crystal may be included, in which a crystallization rate of the lithium hydroxide monohydrate (LiOH·H₂O) is 90% or more.

### [Advantageous Effects]

According to an exemplary embodiment of the present disclosure, impurities in lithium hydroxide prepared by adjusting pressure in the base chamber, the acid chamber, and the like may be reduced, depending on a membrane state in an electrodialysis process.

In addition, the production amount of battery grade lithium hydroxide may be increased by increasing the crystal rate of the lithium hydroxide crystallization process at a latter stage by minimizing an impurity content in the lithium hydroxide solution produced in the electrodialysis process.

### [Description of the Drawings]

FIG. 1 schematically shows an electrodialysis device according to an exemplary embodiment of the present disclosure.
FIG. 2 schematically shows an electrodialysis system according to an exemplary embodiment of the present disclosure.
FIG. 3 shows gauge pressure of the base chamber and the acid chamber of the electrodialysis device in a demo plant continuous experiment.
FIG. 4 is a sulfur (S) component concentration in the lithium hydroxide aqueous solution formed in the base chamber of the electrodialysis device in a demo plant continuous experiment.

### [Best Mode for Invention]

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present disclosure.

The terminology used herein is only for mentioning a certain example, and is not intended to limit the present disclosure. Singular forms used herein also include plural forms unless otherwise stated clearly to the contrary. The meaning of "comprising" used in the specification is embodying certain characteristics, areas, integers, steps, operations, elements, and/or components, but is not excluding the presence or addition of other characteristics, areas, integers, steps, operations, elements, and/or components.

When it is mentioned that a part is "on" or "above" the other part, it means that the part is directly on or above the other part or another part may be interposed therebetween. In contrast, when it is mentioned that a part is "directly on" the other part, it means that nothing is interposed therebetween.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

In addition, unless otherwise particularly stated, % refers to wt%, and 1 ppm refers to 0.0001 wt%.

In the present specification, the term "combination(s) thereof" described in the Markush format refers to a mixture or combination of one or more selected from the group consisting of the constituent elements described in the Markush format, and refers to inclusion of one or more selected from the group consisting of the constituent elements.

Hereinafter, an exemplary embodiment of the present disclosure will be described in detail so that a person with ordinary skill in the art to which the present disclosure pertains may easily carry out the present disclosure. As those skilled in the art would realize, the described embodiments may be modified in various different ways, all without departing from the spirit or scope of the present disclosure.

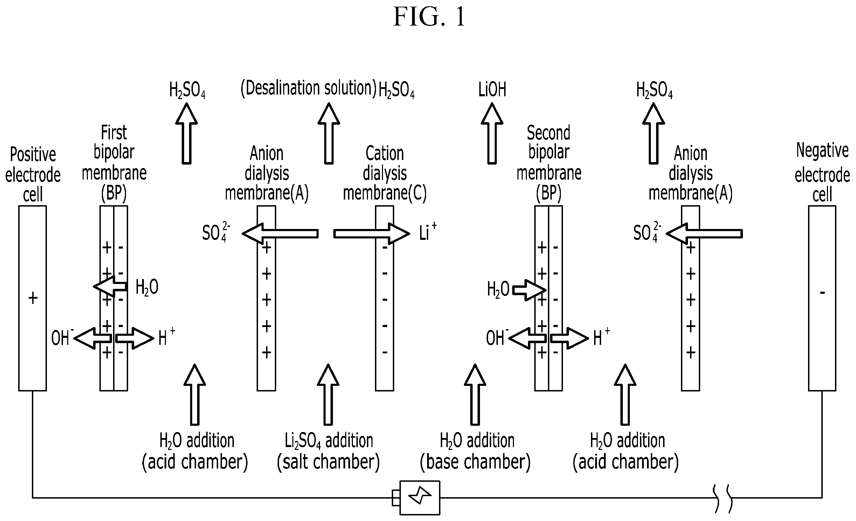

FIG. 1 schematically shows an electrodialysis device according to an exemplary embodiment of the present disclosure.

Referring to FIG. 1, the bipolar electrodialysis device according to an exemplary embodiment of the present disclosure may include a unit pair which is positioned in a repeatedly laminating manner between a positive electrode cell and a negative electrode cell. The unit pair may have a configuration in which a bipolar membrane, an anion dialysis membrane, and a cation dialysis membrane are sequentially positioned. Herein, specifically, in the configuration, the bipolar membrane, a spacer gasket, the anion dialysis membrane, a spacer gasket, the cation dialysis membrane, and a spacer gasket may be sequentially positioned. The unit pairs having the configuration may be positioned sequentially adjacent to each other. Among the two-unit pairs adjacent to each other, the spacer gasket positioned at a latter stage of the cation dialysis membrane of the unit pair positioned in the front may be positioned adjacent to a bipolar membrane of the unit pair positioned adjacent to the latter stage.

Referring to FIG. 1, a first bipolar membrane and the anion dialysis membrane may form an acid chamber, and the anion dialysis membrane and the cation dialysis membrane may form a salt chamber. In addition, the cation dialysis membrane and a second bipolar membrane may form a base chamber.

Hereinafter, a method for preparing lithium hydroxide according to an exemplary embodiment of the present disclosure will be described.

First, a lithium salt aqueous solution is added to a salt chamber of the unit pair, an acid chamber reaction solution is added to an acid chamber, and a base chamber reaction solution is added to a base chamber to perform bipolar electrodialysis.

Herein, when voltage is applied to a bipolar electrodialysis device to allow current to flow, an acid solution is formed in the acid chamber, a lithium hydroxide aqueous solution is formed in the base chamber, and a desalination solution including a remaining lithium salt which has not reacted in the added lithium salt aqueous solution is formed in the salt chamber.

Specifically, a process of forming the acid solution and the lithium hydroxide aqueous solution is as follows.

First, the acid chamber reaction solution added to the acid chamber is hydrolyzed on the surface of the first bipolar membrane of the acid chamber and decomposed into a hydrogen ion and a hydroxide ion. Herein, the decomposed hydroxide ion migrates to a positive electrode cell, and the decomposed hydrogen ion migrates between the first bipolar membrane and the anion dialysis membrane. Meanwhile, the anion of the lithium salt aqueous solution added between the anion dialysis membrane and the cation dialysis membrane passes through the anion dialysis membrane and migrates between the first bipolar membrane and the anion dialysis membrane. Further, the hydrogen ion and the anion are concentrated between the first bipolar membrane and the anion dialysis membrane to form the acid solution.

Next, a process of forming the lithium hydroxide aqueous solution is as follows. A base chamber reaction solution added to the base chamber is hydrolyzed on the surface of the second bipolar membrane and decomposed into a hydrogen ion and a hydroxide ion. Herein, the decomposed hydrogen ion migrates to the negative electrode cell, and the decomposed hydroxide ion migrates between the cation dialysis membrane and the second bipolar membrane. Meanwhile, the lithium ion of the lithium salt aqueous solution added between the anion dialysis membrane and the cation dialysis membrane passes through the cation dialysis membrane and migrates to the base chamber for adding the lithium ion. Further, the hydroxide ion and the lithium ion are concentrated in the base chamber and form a lithium hydroxide aqueous solution.

More specifically, an acid group meets hydrogen hydrolyzed in the bipolar membrane in the positive electrode cell side and is converted into an acid, and a lithium ion migrating to the negative electrode through the cation dialysis membrane reacts with a hydroxide group (OH⁻) occurring in the bipolar membrane and is converted into lithium hydroxide (LiOH).

As an example, the entire reaction formula may be as follows:

Li₂SO₄ (aq) ⇔ 2Li⁺ (base chamber) + SO₄²⁻ (acid chamber)

H₂O ⇔ H⁺ (acid chamber) + OH⁻ (base chamber)

Li₂SO₄ (aq) + 2H₂O ⇔ 2LiOH (aq, base chamber) + H₂SO₄ (aq, acid chamber)

Herein, a lithium ion and an acid group are decomposed and leave from a high-concentration lithium salt aqueous solution added to the salt chamber, and a partly remaining low-concentration lithium salt aqueous solution may be produced and discharged to the outside of the electrodialysis device.

In an exemplary embodiment of the present disclosure, the lithium salt may be specifically a sulfate salt (Li₂SO₄), and the acid may be sulfuric acid (H₂SO₄). Meanwhile, the acid chamber reaction solution may be a low-concentration acid or water (deionized water), and the base chamber reaction solution may be a low-concentration lithium hydroxide aqueous solution or water (deionized water).

In addition, the lithium salt aqueous solution formed in the salt chamber is added to the unit pair positioned adjacent to the latter stage and electrodialysis may be performed like the unit pair of the whole unit.

Herein, direction of cation or anion migration may vary depending on the state of the membranes. As an example, when pin holes occur in the membrane, a physical solution flow through the pin hole occurs, and at this time, in order to minimize the solution flow, pressure of each chamber is adjusted to control a solution flow through the pin hole, thereby minimizing impurity inflow.

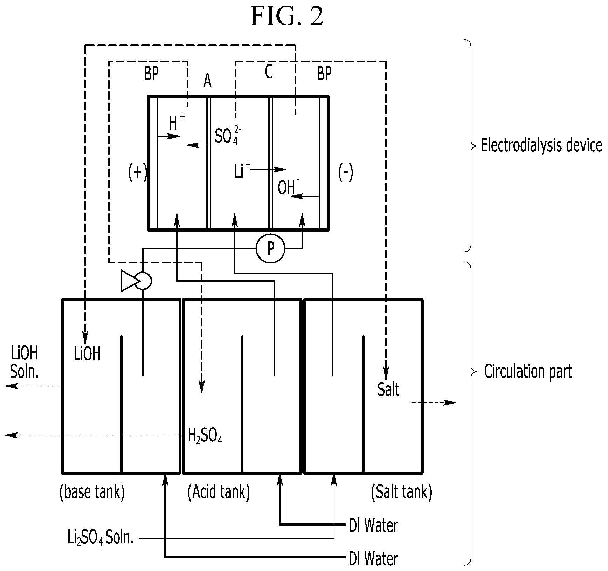

FIG. 2 schematically shows an electrodialysis system according to an exemplary embodiment of the present disclosure.

Referring to FIG. 2, the electrodialysis system for preparing lithium hydroxide according to an exemplary embodiment of the present disclosure may include the electrodialysis device and a circulation part of FIG. 1.

The circulation part may mainly include a base tank, an acid tank, and a salt tank.

Specifically, a lithium hydroxide-containing solution which is formed in the base chamber of the electrodialysis device and discharged flows into the base tank of the circulation part, a high-concentration acid-containing solution which is formed in the acid chamber of the electrodialysis device and discharged flows into the acid tank of the circulation part, and a desalination solution which is formed in the salt chamber of the electrodialysis device and discharged flows into the salt tank of the circulation part.

A partition is installed in the base tank, the acid tank, and the salt tank, so that part of the solutions flowing into each tank may be discharged to the outside and the remainder may be mixed with separately inflowing additional water (deionized water) or the salt solution and circularly supplied to the electrodialysis device. The solution for circulation in each tank of the circulation part may be circularly supplied to the electrodialysis device through a circulation pump and the like.

In an exemplary embodiment of the present disclosure, the gauge pressure of the acid chamber, the base chamber, and the salt chamber may be 0.1 to 2 bar, specifically 0.1 to 1 bar, more specifically 0.1 to 0.5 bar, and still more specifically 0.2 to 0.45 bar.

Meanwhile, a pressure difference (△P) between chambers adjacent to the electrodialysis device may be 1 bar or less, specifically 0.01 to 0.5 bar, more specifically 0.001 to 0.1 bar, and still more specifically 0.001 to 0.05 bar.

When the pressure inside each of the chambers of the electrodialysis device and the pressure difference (△P) between the adjacent chambers satisfy the range, breakage of each membrane positioned between each chamber is prevented and operation is stably performed.

In an exemplary embodiment of the present disclosure, the pressure of the base chamber of the electrodialysis device may be higher than the pressure of the acid chamber. Specifically, the pressure difference between the base chamber pressure and the acid chamber pressure may be 1 bar or less, specifically 0.001 to 0.5 bar, more specifically 0.001 to 0.1 bar, and still more specifically 0.005 to 0.05 bar.

When the pressure of the base chamber, the pressure of the acid chamber, and the pressure difference value between the pressures of the base chamber and the acid chamber satisfy the above conditions, lithium hydroxide may be stably prepared, and also the pressure of the base pressure is relatively high, so that impurities in the prepared lithium hydroxide may be decreased.

In an exemplary embodiment of the present disclosure, part of the solutions flowing into the base tank, the acid tank, and the salt tank are discharged to the outside, and the remaining solutions are mixed with separately inflowing additional water (deionized water) or the salt solution to adjust the concentration, and then may be circularly supplied to the electrodialysis device.

A partition may be installed in the base tank, the acid tank, and the salt tank to separate the solution to form a space for receiving the solutions. In one space formed above, the concentrations of the solutions described later may be adjusted. When the lithium hydroxide to be desired in the present disclosure may be stably and efficiently prepared, the configurations such as material and shape of the base tank, the acid tank, the salt tank, and the partition are not particularly limited.

Specifically, a part of the lithium hydroxide solution flowing into the base tank is supplied to a crystallization process at the latter stage. A Li concentration of the lithium hydroxide solution may be 10 g/L to 30 g/L, specifically 15 g/L to 25 g/L, and more specifically 18 g/L to 22 g/L. When the Li concentration in the lithium hydroxide solution is too low, the amount of water which is to be evaporated in the crystallization process at the latter stage is large, so that energy costs are increased, and when the Li concentration is too high, the current efficiency of the present electrodialysis device itself is lowered. When the current efficiency is lowered, electricity costs required for Li production are increased. The remaining lithium hydroxide solution may be mixed with separately inflowing additional water (deionized water) and circularly supplied to the base chamber of the electrodialysis device. Herein, the lithium hydroxide solution mixed with the water (deionized water) may be circularly supplied to the base chamber of the electrodialysis device through a circulation pump, and a circulation supply flow rate may be adjusted depending on the target pressure of the base chamber of the electrodialysis device. That is, the supply flow rate of the lithium hydroxide solution which is circularly supplied to the base chamber of the electrodialysis device may be adjusted to control pressure inside the base chamber.

A part of the high-concentration acid solution flowing into the acid tank is discharged to the outside. The discharged acid is a sulfuric acid solution and may have a mass concentration of 5% to 20%, specifically 8% to 12%. The concentration of the sulfuric acid may be adjusted in a range where the pH of the salt chamber is maintained, and in the present equipment, the pH of the salt is maintained at 1.5-2.5. When an amount of the OH⁻ ion which diffuses from the base chamber and migrates to the acid chamber is larger than the amount of H⁺ ion which migrates from the acid chamber to the salt chamber, the pH of the salt is decreased. Therefore, the amount of diffusing H⁺ is adjusted depending on the concentration of the base to maintain the pH of the salt. The acid concentration is appropriate for the Li⁺ concentration in the base. The remaining acid may be mixed with separately inflowing additional water (deionized water) and circularly supplied to the acid chamber of the electrodialysis device again. The acid solution may be circularly supplied to the acid chamber of the electrodialysis device through a circulation pump, and a circulation supply flow rate may be adjusted depending on the target pressure of the acid chamber of the electrodialysis device. That is, the supply flow rate of the acid solution which is circularly supplied to the acid chamber of the electrodialysis device may be adjusted to control the pressure inside the acid chamber.

A part of the desalination solution flowing into the salt tank may be discharged to the outside, and the remaining salt may be mixed with an additional salt aqueous solution which separately inflows, and then circularly supplied to the salt chamber of the electrodialysis device again. The desalination solution may be circularly supplied to the salt chamber of the electrodialysis device through a circulation pump, and the circulation supply flow rate may be adjusted depending on the target pressure of the salt chamber of the electrodialysis device.

Meanwhile, a linear velocity of the solution flow in each of the acid chamber, base chamber, and the salt chamber may be 1 to 30 cm/s, specifically 1 to 15 cm/s, more specifically 1 to 7.5 cm/s, and still more specifically 3 to 7 cm/s.

When the linear velocity of the solution flow in each of the acid chamber, the base chamber, and the salt chamber is within the range, lithium hydroxide may be stably prepared while decreasing impurities in the prepared lithium hydroxide solution.

A part of the lithium hydroxide solution flowing into the base tank may be supplied to the crystallization process at the latter stage to form a lithium hydroxide monohydrate (LiOH·H₂O) crystal. When the lithium hydroxide aqueous solution is crystallized to produce the lithium hydroxide monohydrate (LiOH•H₂O), the crystallization rate of the lithium hydroxide monohydrate (LiOH·H₂O) may be 90% or more, specifically 92% to 96%. The crystallization rate may be lowered. It is because a battery grade lithium hydroxide monohydrate may be produced when the crystallization rate is lowered with the increasing impurities.

The crystallization rate of the lithium hydroxide monohydrate (LiOH·H₂O) is affected by impurities contained in the lithium hydroxide aqueous solution supplied to the crystallization device, and the impurities directly affecting the crystallization rate is SO₄²⁻. In particular, since selectivities of the cation dialysis membrane, the anion dialysis membrane, and the bipolar (BP) membrane which are applied to the electrodialysis device for preparing lithium hydroxide (LiOH) from lithium sulfate (Li₂SO₄) may not be 100%, it is impossible to prepare a pure product having no impurity. Therefore, the impurities occurring in the electrodialysis process, such as impurities in the lithium hydroxide solution formed in the base chamber need to be reduced as much as possible.

In an exemplary embodiment of the present disclosure, a sulfur (S) concentration in the lithium hydroxide-containing solution which is formed in the base chamber of the electrodialysis device and discharged may be less than 1 g/L, specifically 0.9 g/L or less.

### [Mode for Invention]

### (Experiment of lithium hydroxide preparation)

A lithium hydroxide production experiment was performed in a demo plant including the electrodialysis system having the configuration of FIG. 2.

As a method for preparing lithium hydroxide including obtaining a lithium hydroxide aqueous solution from the lithium salt aqueous solution, a desalination solution including remaining lithium sulfate (Li₂SO₄) formed by adding a lithium sulfate (Li₂SO₄) aqueous solution to the salt chamber was discharged from the salt chamber and supplied to a separately provided salt tank. A sulfuric acid (H₂SO₄) aqueous solution formed by adding water (deionized water) to an acid chamber was discharged from the acid chamber and supplied to an acid tank. A lithium hydroxide aqueous solution formed in a base chamber by adding water (deionized water) to the base chamber was discharged from the base chamber and supplied to a base tank.

A part of the desalination solution supplied to the salt tank was discharged to the outside of the salt tank. The remaining desalination solution was mixed with lithium sulfate (Li₂SO₄) which was further added from the outside to adjust a lithium sulfate (Li₂SO₄) concentration, and then circularly supplied to the salt chamber of the electrodialysis device. At this time, a circulation supply flow rate was 8-15 m³/hr.

A part of the sulfuric acid (H₂SO₄) aqueous solution supplied to the acid tank was discharged to the outside of the acid tank, and the sulfuric acid (H₂SO₄) aqueous solution remaining in the acid tank was mixed with additionally supplied water (deionized water), and then circularly supplied to the acid chamber of the electrodialysis device. At this time, a circulation supply flow rate was 8-15 m³/hr. The gauge pressure of the acid chamber of the electrodialysis device is shown in the following Table 1.

A part of the lithium hydroxide (LiOH) aqueous solution supplied to the base tank was supplied to a crystallization device to form a lithium hydroxide monohydrate (LiOH·H₂O) crystal. The concentration of the lithium hydroxide (LiOH) aqueous solution remaining in the base tank was adjusted by additionally supplied water (deionized water), and then circularly supplied to the base chamber of the electrodialysis device. At this time, a circulation supply flow rate was 8-15 m³/hr.

Meanwhile, effective areas of the cation dialysis membrane, the anion dialysis membrane, and the bipolar membrane disposed in the electrodialysis device were 0.5 m², and a total of 720 sheets of membrane per one press was applied. At this time, linear velocities of fluids inside the acid chamber, the base chamber, and the salt chamber were about 6 cm/s.

A sulfur (S) concentration in the lithium hydroxide aqueous solution prepared according to the comparative example and the examples having different gauge pressure differences between the base chamber and the acid chamber of the electrodialysis device, and the crystallization rate of the lithium hydroxide monohydrate (LiOH·H₂O) formed in the crystallization device are shown in the following Table 1. It shows test results when a battery grade lithium hydroxide monohydrate was produced in a real process.

**(Table 1)**

| | Gauge pressure (bar) | | | S concentration in LiOH aqueous solution discharged from base chamber (g/L) | Crystallization rate (%) |
|---|---|---|---|---|---|
| | Base chamber | Acid chamber | △P (P_{base}-P_{acid}) | | |
| Comparative Example 1 | 0.231 | 0.236 | -0.005 | 1.00-1.03 | 88-90 |
| Example 1 | 0.229 | 0.216 | 0.012 | 0.80-085 | 92-95 |
| Example 2 | 0.232 | 0.218 | 0.013 | 0.80-0.85 | 92-95 |
| Example 3 | 0.411 | 0.379 | 0.031 | 0.60-0.64 | 94-96 |

Referring to Table 1, in Examples 1 to 3 where the gauge pressure of the base chamber was higher than the gauge pressure of the acid chamber, the sulfur (S) concentration in the lithium hydroxide (LiOH) aqueous solution which was formed in the base chamber of the electrodialysis device and discharged was 0.60 to 0.85 g/L. However, in Comparative Example 1 where the gauge pressure of the base chamber was lower than the gauge pressure of the acid chamber, the sulfur (S) concentration in the prepared lithium hydroxide (LiOH) aqueous solution was 1.00 to 1.03 g/L, which was higher.

In addition, in Example 1 to 3, the crystallization rate of the lithium hydroxide monohydrate (LiOH·H₂O) formed in the crystallization device was more than 90%, but in Comparative Example 1, the crystallization rate of the lithium hydroxide monohydrate (LiOH·H₂O) was 90% or less.

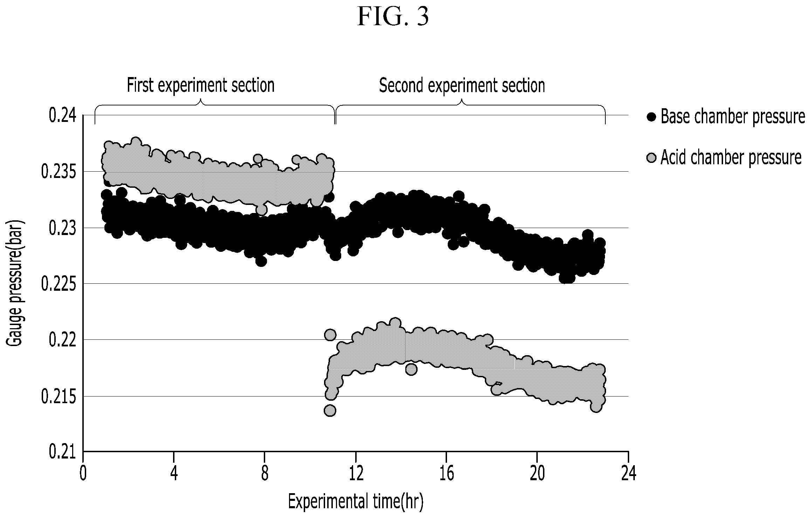

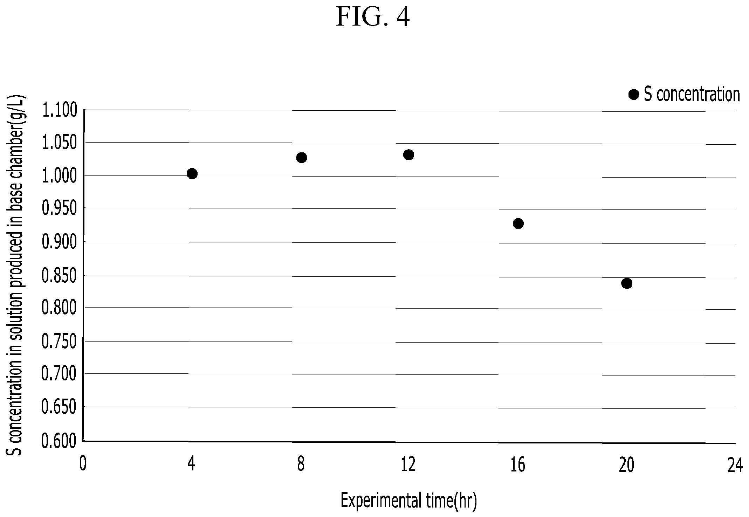

A continuous experiment was performed for 24 hours in the demo plant. FIG. 3 shows gauge pressure of the base chamber and the acid chamber of the electrodialysis device in the continuous experiment of the demo plant, and FIG. 4 shows the sulfur (S) component concentration in the lithium hydroxide aqueous solution formed in the base chamber of the electrodialysis device in the demo plant continuous experiment.

Referring to FIGS. 3 and 4, in a first reaction section where the gauge pressure of the base chamber was higher than the gauge pressure of the acid chamber, the sulfur (S) concentration in the lithium hydroxide aqueous solution which was formed in the base chamber of the electrodialysis device and discharged was confirmed to be 1 g/L or more. In the second reaction section where the gauge pressure of the base chamber was lower than the gauge pressure of the acid chamber, the sulfur (S) concentration in the lithium hydroxide aqueous solution which was formed in the base chamber of the electrodialysis device and discharged was confirmed to be less than 0.95 g/L.

The present disclosure is not limited by the above exemplary embodiments and may be manufactured in various forms different from each other, and it may be understood that a person with ordinary skill in the art to which the present disclosure pertains may carry out the present disclosure in another specific form without modifying the technical idea or essential feature of the present disclosure. Therefore, it should be understood that the exemplary embodiments described above are illustrative and are not restrictive in all aspects.

## Claims

1. A method for preparing lithium hydroxide, the method comprising:
adding a lithium salt aqueous solution to a salt chamber between an anion dialysis membrane and a cation dialysis membrane adjacent to each other of a bipolar electrodialysis device, adding an acid chamber reaction solution to an acid chamber between a bipolar membrane and the anion dialysis membrane, and adding a base chamber reaction solution to a base chamber between a bipolar membrane and the cation dialysis membrane;
supplying a desalination solution formed in the salt chamber to a salt tank, supplying an acid solution formed in the acid chamber to an acid tank, and supplying a lithium hydroxide solution formed in the base chamber to a base tank; and
circularly supplying the desalination solution in the salt tank to the salt chamber, circularly supplying the acid solution in the acid tank to the acid chamber, and circularly supplying the lithium hydroxide solution in the base tank to the base chamber,
wherein a gauge pressure of the salt chamber is higher than a gauge pressure of the acid chamber.

2. The method for preparing lithium hydroxide of claim 1, wherein:
a gauge pressure difference between the salt chamber and the acid chamber is 0.001 to 0.5 bar.

3. The method for preparing lithium hydroxide of claim 2, wherein:
the gauge pressure difference between the salt chamber and the acid chamber is 0.005 to 0.05 bar.

4. The method for preparing lithium hydroxide of claim 1, wherein:
a gauge pressure inside the salt chamber, the acid chamber, and the base chamber is 0.1 to 2 bar.

5. The method for preparing lithium hydroxide of claim 4, wherein:
the gauge pressure inside the salt chamber, the acid chamber, and the base chamber is 0.1 to 0.5 bar.

6. The method for preparing lithium hydroxide of claim 1, wherein:
a pressure difference between the salt chamber and the acid chamber and a pressure difference between the salt chamber and the base chamber are 0 to 1 bar.

7. The method for preparing lithium hydroxide of claim 1, wherein:
a linear velocity of solution flow inside the acid chamber and the base chamber is 1 to 30 cm/s.

8. The method for preparing lithium hydroxide of claim 1, wherein:
pressure inside the salt chamber, the acid chamber, and the base chamber is controlled by adjusting a flow rate of the desalination solution which is circularly supplied from the salt tank to the salt chamber, a flow rate of the acid solution which is circularly supplied from the acid tank to the acid chamber, and a flow rate of the lithium hydroxide solution which is circularly supplied from the base tank to the base chamber.

9. The method for preparing lithium hydroxide of claim 1, wherein:
after supplying the lithium hydroxide solution formed in the base chamber to a base tank,
supplying a part of the lithium hydroxide solution supplied to the base tank to a crystallization device at a latter stage to form a lithium hydroxide monohydrate (LiOH·H₂O) crystal is included,
in which a lithium hydroxide monohydrate (LiOH·H₂O) crystallization rate is 90% or more.
